(19) Europäisches Patentamt
European Patent Office
Office européen des brevets

(11) **EP 2 136 958 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **08716575.9**

(22) Anmeldetag: **17.03.2008**

(51) Int Cl.:
**B23K 26/08** *(2006.01)*    **B44C 1/22** *(2006.01)*

(86) Internationale Anmeldenummer:
**PCT/EP2008/002105**

(87) Internationale Veröffentlichungsnummer:
**WO 2008/113535 (25.09.2008 Gazette 2008/39)**

(54) **Verfahren und Maschine zur Werkstückbearbeitung**

METHOD AND DEVICE FOR MACHINING A WORKPIECE

PROCÉDÉ ET DISPOSITIF D'USINAGE DE PIÈCES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.03.2007   DE 102007012816**

(43) Veröffentlichungstag der Anmeldung:
**30.12.2009   Patentblatt 2009/53**

(73) Patentinhaber: **Sauer GmbH Lasertec**
**87459 Pfronten (DE)**

(72) Erfinder:
• **HILDEBRAND, Peter**
**87459 Pfronten (DE)**
• **KUHL, Michael**
**87629 Füssen (DE)**

(74) Vertreter: **Beetz & Partner mbB**
**Patentanwälte**
**Steinsdorfstraße 10**
**80538 München (DE)**

(56) Entgegenhaltungen:
**EP-A- 1 174 208    WO-A-00/18535**
**DE-A- 4 209 933    US-B1- 6 193 899**

**Beschreibung**

Die Erfindung betrifft ein Verfahren und ein Maschine zur Werkstückbearbeitung mittels eines Laserstrahls nach den Oberbegriffen der unabhängigen Patentansprüche. Solche sind aus der EP 1 174 208 bekannt.

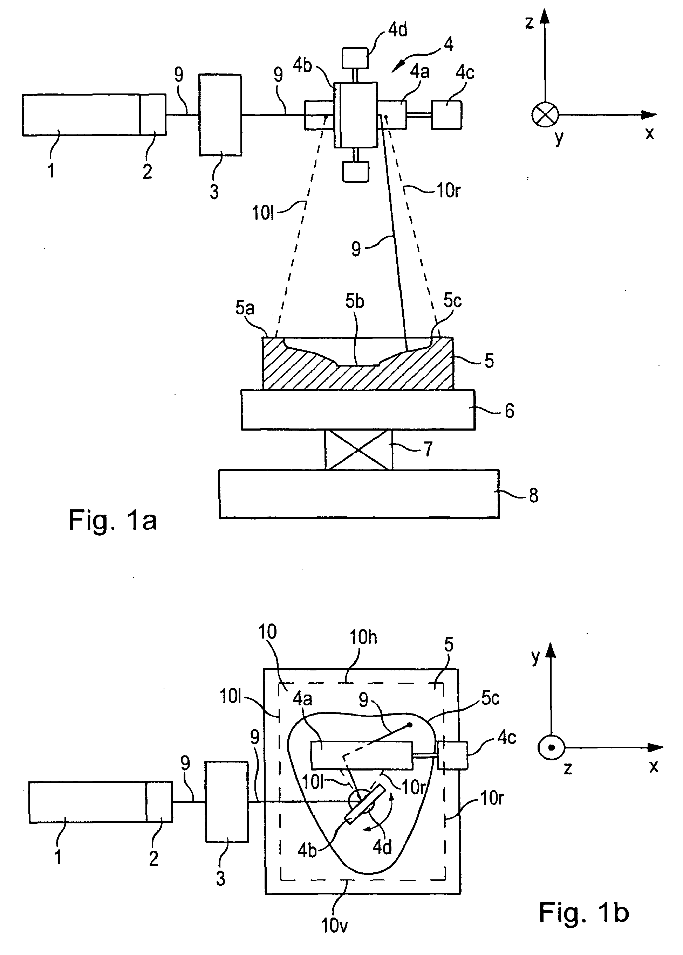

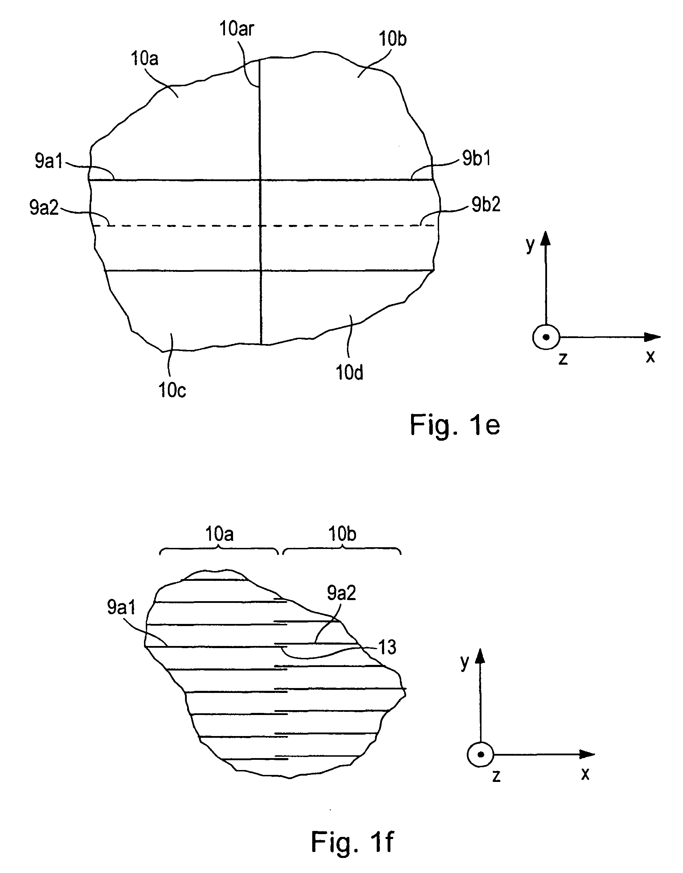

Fig. 1a zeigt einen allgemeinen Aufbau einer Laserbearbeitungsmaschine. 1 ist eine Laserquelle, 2 ein An/Ausschalter für das Laserlicht, 3 eine Optik für die Fokussierung des Laserstrahls auf die Werkstückoberfläche, 4 eine Strahlführung, um den Laserstrahl auf bzw. über das Werkstück führen zu können, 5 das Werkstück, 6 ein Werkstücktisch, 7 eine Verstelleinrichtung für den Werkstücktisch längs mindestens zweier Raumrichtungen und 8 der Maschinenrahmen im Sinne eines Fixpunkts. Schematisch gezeigt ist auch ein rechtwinkliges Koordinatensystem. Die x- und y-Achse können horizontale Achsen sein, die z-Achse eine vertikale Achse.

Die Laserquelle 1 emittiert einen vorzugsweise gepulsten Laserstrahl 9, der von der Strahlführung 4 in gewünschter Weise über die Werkstückoberfläche geführt wird. Die Werkstückbearbeitung kann dabei entweder die Gesenkbildung sein, bei der der Laserstrahl flächendeckend über die abzutragende Fläche geführt wird, indem er sie im Laufe der Zeit vollständig überstreicht, z.B. mäandernd, wodurch eine Schicht einer bestimmten Dicke und einer genau definierten Umgrenzung abgetragen wird, und wobei dieser flächige Abtrag in die Tiefe hinein wiederholt ausgeführt wird. Es kann aber auch die Oberflächenbearbeitung in der Weise angesprochen sein, dass keine voluminöser Abtrag erwünscht ist, sondern vielmehr die Bearbeitung der existierenden Oberfläche, um ihr bestimmte optische oder mechanische Eigenschaften zu verleihen.

Die Strahlführung 4 kann sich kreuzende Schwingspiegel 4a, 4b aufweisen, die von jeweiligen Antriebseinheiten 4c und 4d angetrieben werden. Sie haben jeweils einen bestimmten Auslenkungsbereich, der dementsprechend die Führung des Laserstrahls in einem bestimmten Bereich der Werkstückoberfläche erlaubt. In Fig. 1a sind die Bereichsgrenzen links und rechts durch die Bezugsziffern 10l und 10r gestrichelt angedeutet.

Fig. 1b zeigt die Verhältnisse in Draufsicht. Gleiche Bezugsziffern bedeuten gleiche Komponenten. In der gezeigten Ausführungsform sind die zwei Schwingspiegel in horizontaler Richtung voneinander beabstandet und stehen vertikal über dem Werkstück. Schwingspiegel 4b rotiert reversibel um die z-Achse, Schwingspiegel 4a um die x-Achse. Entsprechend der jeweils momentanen Stellung der Spiegel trifft der Laserstrahl auf eine bestimmte Stelle unten auf dem Werkstück 5. Dort markiert 5c den Rand des Gesenks, also letztlich die maximal benötigte Auslenkung des Laserstrahls, um das Gesenk in der gewünschten Weise fertigen zu können.

Auf dem Werkstück 5 sind gestrichelt die Projektionen der Auslenkungsgrenzen 10l und 10r auf der Werkstückoberfläche angezeichnet. In gleicher Weise wie links und rechts gibt es diese Grenzen auch (in Fig. 1a betrachtet) vorne und hinten, so dass dementsprechend auch Grenzen 10v und 10h in der Auslenkbarkeit existieren. Somit ist auf der Werkstückoberfläche insgesamt ein Arbeitsfenster definierbar, innerhalb dessen bei einer gegebenen relativen Positionierung von Strahlführung und Werkstück zueinander das Werkstück bearbeitbar ist. Das Arbeitsfenster 10, das natürlich nur als logische Größe existiert und nicht physisch erkennbar ist, ist durch die Begrenzungen 10l, 10r, 10v und 10h beschreibbar. Diese Grenzen können durch die Auslenkbarkeit der Schwingspiegel definiert sein. Sie können aber auch durch andere Gegebenheiten definiert sein, etwa durch Blenden oder auch durch regelungstechnische Begrenzungen. Es wird darauf verwiesen, dass die Schwingspiegel alleine ein längs einer Dimension tailliertes Arbeitsfenster erzeugen würden, da die Ausgangspunkte der Strahlverschwenkungen entsprechend den unterschiedlich positionierten Spiegeln unterschiedlich liegen. Ein rechtwinkliges und vorzugsweise quadratisches Arbeitsfenster kann hieraus bspw. in der Weise gewählt werden, dass die kleinste Abmessung der Taille als Fenstergröße gewählt wird.

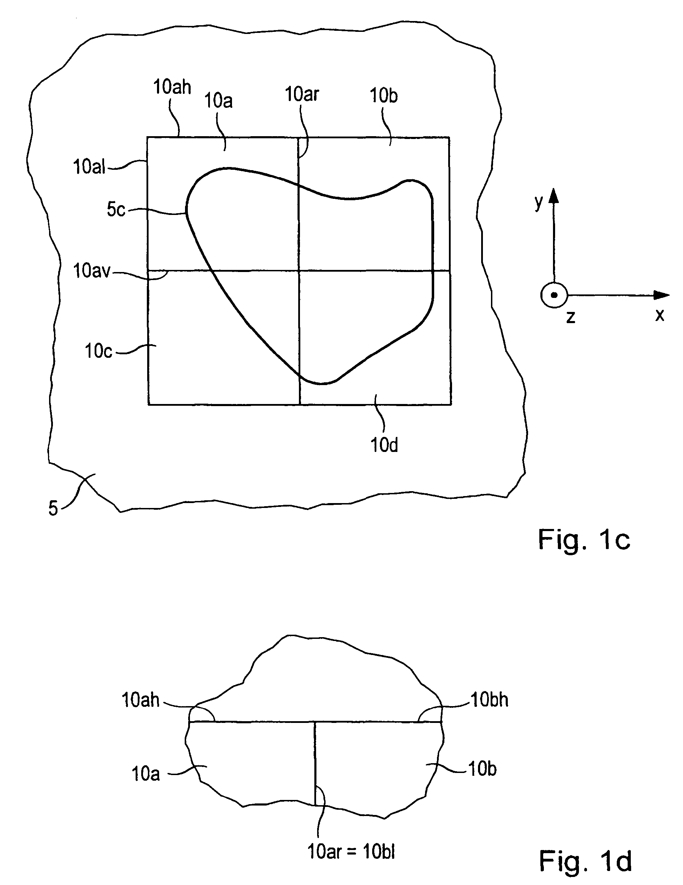

Fig. 1c zeigt eine Situation, in der ein Gesenk so groß ist, dass es nicht innerhalb eines einzigen Arbeitsfensters bearbeitet werden kann. Linie 5c markiert die äußere Umrandung des Gesenks 5. Das Gesenk 5 ist dabei so groß, dass es nicht innerhalb eines einzigen Arbeitsfensters 10, wie es in Fig. 1b gezeigt ist, bearbeitet werden kann. Somit müssen Werkstück 5 und Führung 4 relativ zueinander verschoben werden, um solche Bereiche des Werkstücks, die aus einer ersten Relativposition heraus nicht bearbeitet werden können, aus einer zweiten Relativposition heraus bearbeiten zu können. Das Vorgehen ist schematisch in Fig. 1c gezeigt. Hier sind einzelne Arbeitsfenster 10a, 10b, 10c und 10d gezeigt, die nacheinander durch die relative Positionierung von Werkstück (Tisch) und Strahlführung zueinander eingestellt werden. Innerhalb einer solchen relativen Positionierung werden dann die gewünschten Bearbeitungen vorgenommen. Danach wird die relative Positionierung auf ein anderes der Fenster verschoben und dann dort die Bearbeitung mittels Laserstrahlführung vorgenommen. Es können auf diese Weise mehrere Relativpositionen angefahren werden, innerhalb derer dann jeweils die Bearbeitungen vorgenommen werden. Für Fenster 10a sind die Begrenzungen 10ah, 10ar, 10av und 10al angedeutet.

Fig. 1d zeigt einen vergrößerten Ausschnitt. Die Bearbeitungsfenster werden üblicherweise so aneinander gelegt, dass sie unmittelbar aneinander grenzen. Dies führt dazu, dass beispielsweise die rechtsseitige Begrenzung 10ar des Fensters 10a auch die linksseitige Begrenzung 10b1 des Fensters 10b ist. DIE WO 00/18535 beschreibt ein solches Verfahren. Weiterer relevanter Stand der Technik sind die DE 100 32 981 und die DE 4209933.

Fig. 1e zeigt dann schematisch den Bearbeitungsvorgang. Es ist wieder (vergrößert) ein Ausschnitt aus der Werkstückoberfläche gezeichnet. Gezeigt sind vier aneinandergrenzende Arbeitsfenster 10a, 10b, 10c und 10d. Aus der zum Arbeitsfenster 10a führenden Relativposition hinaus wird beispielsweise eine Spur 9a1 für einen kontinuierlichen Materialabtrag bis zur rechtsseitigen Fenstergrenze 10ar gezogen, die dann aus einer neuen, zu einem neuen Arbeitsfenster 10b führenden Relativposition heraus als Spur 9b1 fortgesetzt werden kann. Gleiches gilt dann, wenn beispielsweise nicht ein kontinuierlicher Abtrag zu bewerkstelligen ist, sondern wenn die Oberfläche nur punktuell oder an einigen Stellen mittels Laserstrahl bearbeitet werden soll. Auch dann kann aus der einen Relativposition entsprechend Fenster 10a heraus eine intermittierende Bearbeitung 9a2 eingestellt werden, die dann aus der anderen Relativposition heraus, die zum Fenster 10b führt, mit der intermittierenden Bearbeitung 9b2 fortgesetzt werden kann. Auf diese Weise ist es möglich, Gesenke bzw. Oberflächenbereiche zu bearbeiten, die größer als das Arbeitsfenster der Laserstrahlführung 4 sind.

Nachteil des Verfahrens ist es aber, dass die Übergänge auf der vollständig bearbeiteten Oberfläche sichtbar sein können. Grund hierfür ist, dass die Stellgenauigkeiten für die Relativposition von Werkstück und Strahlführung zueinander Ungenauigkeiten aufweisen, die dazu führen können, dass der Endpunkt der Spur aus der einen relativen Arbeitsposition entsprechend dem einen Fenster (z.B. 10a) heraus nicht genau am Anfangspunkt der Spur aus der anderen Relativposition (entsprechend dem anderen Arbeitsfenster, z.B. 10b) heraus anliegen. Es kann hier zu Überlappungen oder Lücken oder zu Verschiebungen kommen. Ein anderer Grund für solche "Anschlußfehler" sind Effekte beim Ein- und Ausschalten des Laserstrahls, die auch dazu führen können, dass die End- und Anfangsbereiche der jeweiligen Spuren nicht wie idealerweise gewünscht aneinander liegen, sondern mit deutlich wahrnehmbaren Diskontinuitäten gefertigt werden. Auch Randeffekte der Spiegel oder in der Spiegelführung können zu Ungenauigkeiten führen.

Dabei ist darauf zu verweisen, dass eine einzige Diskontinuität nicht auffallen würde. Geht man z. B. von einer Stellgenauigkeit in x-y-Richtung von z.B. 10 $\mu$m aus, dann würde ein einziger Fehler in dieser Größenordnung sicherlich nicht bemerkt werden. Da aber der Fehler systembedingt wiederholt und in streng korrelierter Weise an den Arbeitsfenstergrenzen auftritt, wird er unter anderem optisch als eine längs einer Arbeitsfenstergrenze verlaufenden Linie wahrnehmbar sein und insoweit dann auch fertigungstechnisch gegebenenfalls ein Problem darstellen. Dies gilt im Übrigen nicht nur dann, wenn ein Gesenk in die Tiefe zu bilden ist und der flächige Materialabtrag gewünscht ist, sondern auch dann, wenn lediglich eine Oberflächenbearbeitung vorzunehmen ist, selbst dann, wenn dort nur punktweise Bearbeitung entsprechend der Führung 9a2 und 9b2 vorgenommen wird. Auch dann würden sich Überlappungen oder Lücken oder Verschiebungen längs der Arbeitsfenstergrenzen deutlich wahrnehmbar auswirken.

Die EP 1174208A2 beschreibt ein Verfahren zur Materialbearbeitung mittels Laser. ein Werkstück wird in mehreren überlappenden Arbeitsfenstern bearbeitet. Im Überlappungsbereich wird der Übergang in den jeweiligen Spuren von einem Arbeitsfenster auf das benachbarte gleichmäßig verteilt.

Die US 6193899 beschreibt ein System zum optischen Ausrichten von Schichten und Substraten gedruckter Leiterplatten.

Die WO 00/18535 beschreibt ein Verfahren zum Materialabtrag, bei dem ein Werkstück in mehreren überlappenden Arbeitsfenstern bearbeitet wird.

Die DE 4209933 beschreibt ein Verfahren zur Oberflächenveränderung mittels Laser.

Aufgabe der Erfindung ist es, ein Verfahren gemäß Anspruch 1 und eine Maschine gemäß Anspruch 12 zur Werkstückbearbeitung mittels Laserstrahlen anzugeben, die eine gleichmäßigere und insbesondere nicht wahrnehmbare Bearbeitung eines Werkstücks aus verschiedenen Relativpositionen von Werkstück und Laserstrahlführung zueinander heraus erlauben.

Diese Aufgabe wird mit den Merkmalen der unabhängigen Patentansprüche gelöst. Abhängige Patentansprüche sind auf bevorzugte Ausführungsformen der Erfindung gerichtet.

Bei einem Verfahren zur Werkstückbearbeitung mittels eines Laserstrahls gemäß Anspruch 1 wird ein Laserstrahl mittels einer Strahlführung innerhalb eines Arbeitsfensters über die Werkstückoberfläche geführt, wobei Strahlführung und Werkstück in einer Verschiebungsrichtung um eine Verschiebungsstrecke so gegeneinander verschieblich sind, dass sie zueinander eine erste und eine zweite Arbeitsrelativposition einnehmen können. Aus der zweiten Arbeitsrelativposition heraus wird dabei eine Stelle auf dem Werkstück bearbeitet, die in Verschiebungsrichtung betrachtet hinter einer aus der ersten Arbeitsrelativposition bearbeiteten Stelle liegt.

Bei einem Verfahren zur Werkstückbearbeitung mittels eines durch eine Strahlführung geführten Laserstrahls gemäß Anspruch 1 können Werkstück und Strahlführung um eine Verschiebungsstrecke gegeneinander verschoben werden, wobei die Verschiebungsstrecke kleiner ist als die Ausdehnung des Arbeitsfensters in Verschiebungsrichtung.

Die nacheinander durch unterschiedliche relative Positionierungen von Werkstück und Strahlführung zueinander einzustellenden Arbeitsfenster überlappen. Im Überlappungsbereich können Stellen des Werkstücks wahlweise aus dem einen Fenster (aus der einen Relativposition heraus) oder aus dem später eingestellten anderen Fenster (aus der anderen Relativposition heraus) bearbeitet werden. Dies kann genutzt werden, um den Fehler räumlich zu verteilen, so dass er weniger bis gar nicht mehr wahrnehmbar ist. Die Wahl wird nach Maßgabe eine Wahrschreinbictikeibfunktition getroffen.

Innerhalb des Überlappungsbereichs können verschiedene Strategien gefahren werden: Innerhalb einer Spur können schon Bearbeitungsstellen aus der einen Relativposition heraus mit solchen aus der anderen Relativposition heraus verschachtelt werden. Vorzugsweise sind dann erstere als gefertigt in einem Speicher gespeichert, so dass dann die späteren dazwischengelegt werden können. Es ist aber auch möglich, innerhalb des Übergangsbereichs unterschiedliche mehr oder minder kontinuierliche, zueinander mehr oder minder parallele Spuren an unterschiedlichen Positionen in Führungsrichtung (Richtung der Spur) enden zu lassen, um sie dann an der jeweiligen Position aus der anderen Relativposition heraus fortzuführen. Diese in Richtung der Spur unterschiedlichen Endpunkte können statistisch eingestellt sein oder einem quasi zufälligen Muster oder einem regelmäßigen Muster folgen. Die wie oben (statistisch, quasi-statistisch) festgelegten und dann auch gefertigten Endpunkte der jeweiligen Spuren werden gespeichert, so dass sie später aus einem anderen, geeigneten Arbeitsfenster heraus aufgenommen und fortgesetzt werden können.

Die Einstellung und Veränderung der Arbeitsfenster erfolgt durch relatives Verfahren des Werkstücks 5 gegenüber der Strahlführung 4. Hierzu kann z. B. der Werkstücktisch 6 mittels der Verstelleinrichtung 7 längs mindestens zweier Raumrichtungen, vorzugsweise in der Ebene der Werkstückoberfläche, gegenüber dem Maschinenrahmen 8 verfahrbar sein. Zusätzlich oder stattdessen kann auch die Strahlführung 4, ggf. zusammen mit Laser 1, Schalter 2 und Optik 3, gegenüber dem Maschinenrahmen verfahrbar sein.

Mit dem erfindungsgemäßen Verfahren wird der Positionierungsfehler, der sich relativ im Vergleich der unterschiedlichen relativen Positionierungen entsprechend den unterschiedlichen Arbeitsfenstern ergibt, als solcher nicht korrigiert, sondern hingenommen. Er wird aber "geografisch" in der Oberfläche verteilt, so dass er weniger korreliert auftritt und somit weniger störend ist bzw. weniger wahrnehmbar ist.

Eine Machine gemäß Anspruch 12 ist ebenfalls Gegenstand der Erfindung. Sie weist neben den schon genannten Komponenten eine Steuerung und einen Speicher auf, wobei die Steuerung die üblichen Steuerungsaufgaben (insbesondere Strahlführung, An-/Austastung des Lasers, relative Positionierung von Werkstück und Strahlführung) und dazu auch die überlappende Festlegung der Arbeitsfenster und jeweils darin die Bestimmung der Bearbeitungsgrenzen oder -stellen trifft. Im Speicher können diese Bestimmungen gespeichert sein, so dass sie später aufgegriffen werden können.

Nachfolgend werden Bezug nehmend auf die Zeichnung einzelne Ausführungsformen der Erfindung beschrieben, es zeigen

Fig. 1 Darstellungen zum Stand der Technik,
Fig. 2 eine erfindungsgemäße Vorgehensweise,
Fig. 3 schematisch weitere mögliche Vorgehensweisen nach der Erfindung,
Fig. 4 ein erfindungsgemäßes Arbeitsverfahren,
Fig. 5 Möglichkeiten der Verteilung im Übergangsbereich,
Fig. 6 eine Möglichkeit der Spurführung, und
Fig. 7 Verhältnisse bei einer besonderen Ausführungsform.

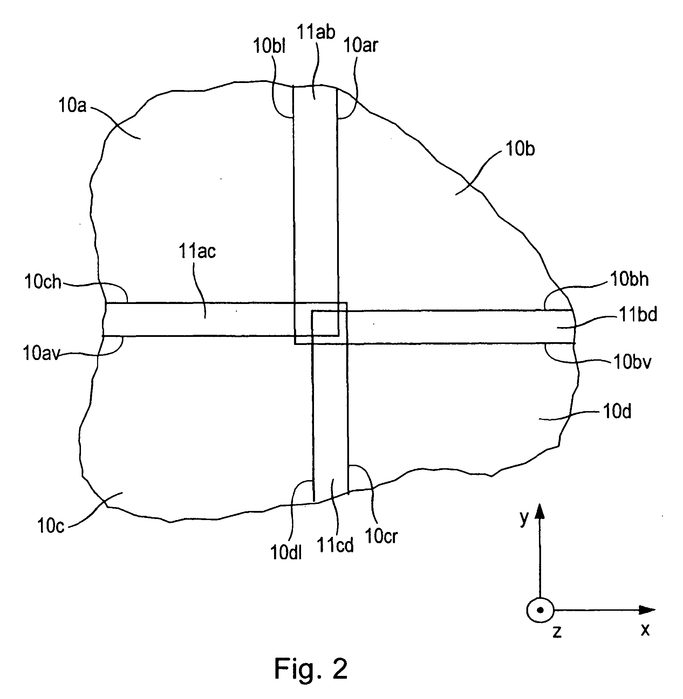

Fig. 2 zeigt, wie erfindungsgemäß die Arbeitsfenster auf einer Werkstückoberfläche eingestellt werden können. Es ist wieder der Bereich gezeigt, in dem vier Arbeitsfenster 10a, 10b, 10c und 10d aneinander grenzen. Es sind auch die jeweiligen Grenzen der Arbeitsfenster eingezeichnet, wobei nochmals darauf verwiesen wird, dass diese Grenzen real nicht erkennbar sind, sondern aufgrund von Systemgegebenheiten existieren. Die Fenster werden so eingestellt, dass sie überlappen. Es entstehen so Überlappungsbereiche 11. Der Überlappungsbereich 11 ab liegt beispielsweise sowohl im Arbeitsfenster 10a als auch im Arbeitsfenster 10b. Überlappungsbereich 11bd liegt sowohl im Arbeitsfenster 10b als auch im Arbeitsfenster 10d. Positionen auf der Werkstückoberfläche in einem Überlappungsbereich können wahlweise aus dem einen oder aus dem anderen Arbeitsfenster heraus bearbeitet werden. Fig. 2 zeigt, dass die Grenzen der Arbeitsfenster eben wegen der Überlappung nicht mehr aufeinanderliegen. Vielmehr liegt die Grenze des einen Arbeitsfensters innerhalb des benachbarten Arbeitsfensters. Arbeitsfenster können rechtwinklig oder quadratisch sein.

Die Überlappung kann in ihrer Größe einstellbar sein. Man kann einen Überlappungsgrad ue definieren als

$$ue = due \; / \; dA$$

wobei - in eine Dimension der Werkstückoberfläche betrachtet - due die Abmessung der Überlappung ist und dA die Abmessung des Arbeitsfensters insgesamt ist. Die Überlappung entsteht durch relative Verschiebung längs einer Strecke v, die kleiner ist als die Abmessung dA des Arbeitsfensters. Es gilt

$$dA = v + due$$

Anders ausgedrückt kann die Verschiebungsstrecke v von Strahlführung und Werkstück relativ zueinander einen Bruchteil bzw. Anteilsfaktor n der Abmessung des Arbeitsfenster dA in Verschiebungsrichtung sein. n kann 0,9 oder kleiner sein oder 0,55 oder kleiner oder 0,35 oder kleiner.

Was das betrachtete Arbeitsfenster und dessen Abmessung dA angeht, kann insoweit auch ein "freiwillige" auf ein Maß begrenztes Fenster angesprochen sein, das kleiner als das technisch mögliche Maß gewählt werden kann. Beispielsweise kann es wünschenswert sein, den Auftreffwinkel des Laserstrahls auf der Werkstückoberfläche innerhalb eines bestimmten Bereichs zu halten oder Randeffekte bei der Strahlsteuerung zu vermeiden. Die Winkelbegrenzung kann erreicht werden, indem der Strahl ausgehend von der Mitte (senkrechte Auftreffrichtung) nur um einen bestimmten Betrag nach links, rechts, oben und unten ausgelenkt wird, so dass ein dementsprechend kleineres Arbeitsfenster mit einem gegenüber dem technisch Möglichen kleinerem dA entsteht. Die Abmessung dA kann als Obergrenze 90%, 80%, 70% oder 60% der technisch möglichen Abmessung sein. Ein so freiwillig begrenztes Arbeitsfenster kann eingestellt werden, indem dem technisch möglichen Arbeitsfenster nur solche Bearbeitungsstellen zugeordnet werden, dass sich die gewünschte Begrenzung ergibt. Die gewünschten Überlappungen werden dann unter Berücksichtigung der durch die freiwillige Begrenzung entstandene Fensterabmessung dA eingestellt.

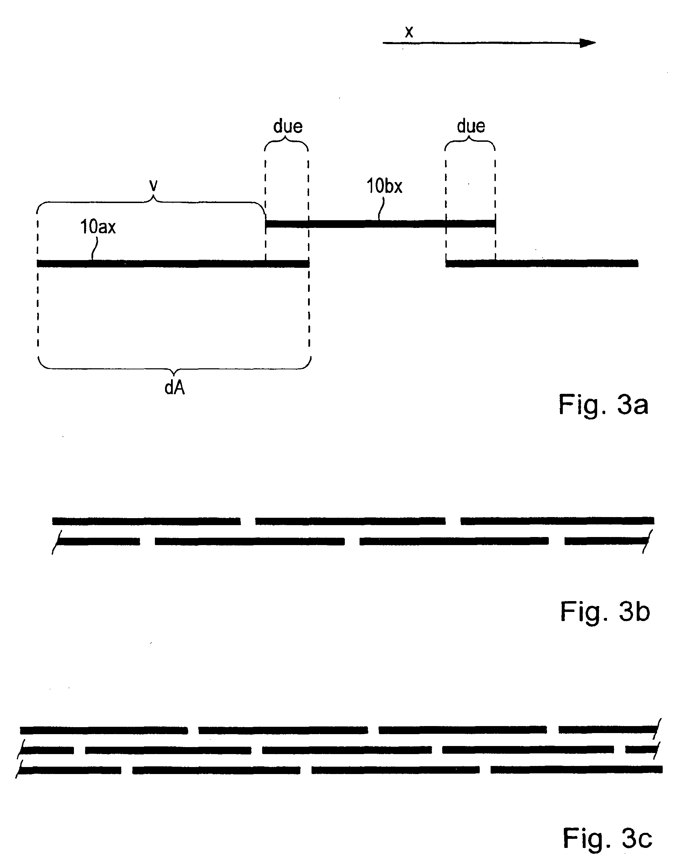

In Fig. 3a sind die betrachteten Größen schematisch gezeigt. Die dicken schwarzen Linien dort symbolisieren schematisch die Erstreckung des Arbeitsfensters in eine der Flächendimensionen, z. B. die x-Richtung. Die übereinanderliegenden Linien sollen nicht eine bestimmte Anordnung der Fenster in z-Richtung andeuten (denn die Fenster existieren nur virtuell), sondern sollen nur schematisch anzeigen, inwieweit die jeweiligen Arbeitsfenster sich überlappen. Balken 10ax symbolisiert die Abmessung des Arbeitsfensters 10a in x-Richtung, Balken 10bx die Abmessung des Arbeitsfensters 10b. Üblicherweise sind diese Werte gleich, denn sie hängen in der Regel von konstruktiven Eigenschaften des Lasers, der Optik und der Strahlführung ab, die sich durch relative Verschiebung von Strahlführung 4 und Werkstück 5 zueinander zur Veränderung des Arbeitsfensters nicht ändern.

Zur Bestimmung des Überlappungsgrades ue werden die bestimmenden Größen vorzugsweise in Richtung parallel zu einer Grenze des Arbeitsfensters gemessen. Die Überlappung ue kann größer als 1 %, größer 5 %, größer 10 % sein. Sie kann auch 50 % (Fig. 3b) oder größer sein. Das führt dazu, dass jede Stelle auf dem Werkstück aus mindestens zwei Arbeitsfenstern heraus bearbeitbar ist. Sie kann auch 66,6 % (Fig. 3c) oder größer sein. Das führt dazu, dass jede Stelle auf dem Werkstück aus mindestens drei Arbeitsfenstern heraus bearbeitbar ist. Die Überlappungsgrade ue können in unterschiedliche Richtungen (x, y) der Werkstückoberfläche unterschiedlich sein. Links- und rechtsseitige Überlappung können gleich oder unterschiedlich sein, gleiches gilt für Überlappungen vorne und hinten. Die Überlappungen links und rechts bzw. vorne und hinten können symmetrisch und in beide Dimensionen der Werkstückoberfläche eingestellt werden.

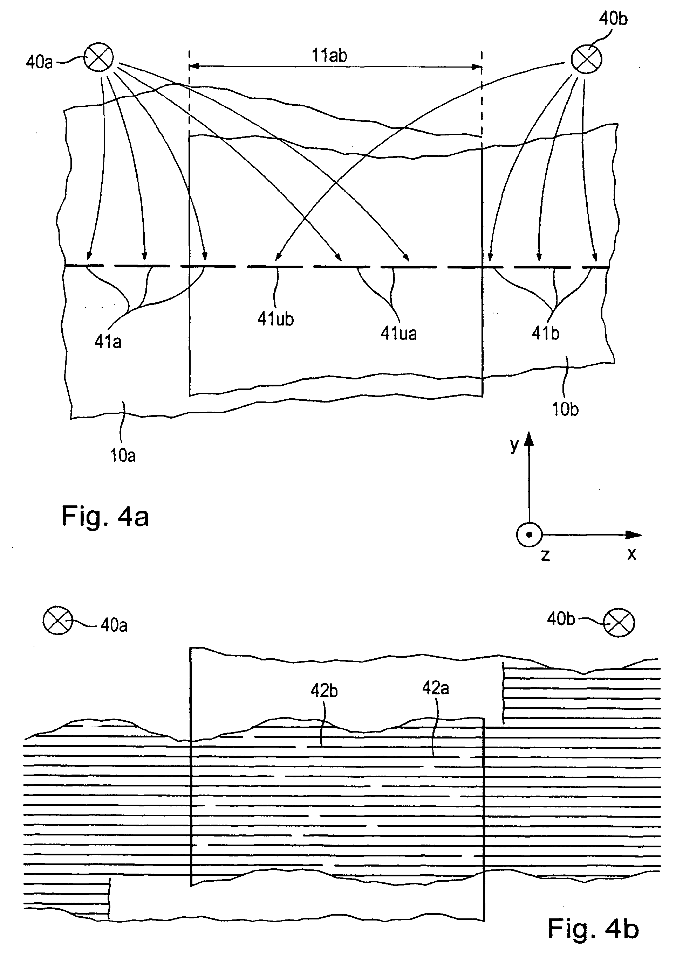

Fig. 4a zeigt eine Vorgehensweise im Überlappungsbereich 11 und außerhalb davon. Außerhalb der Überlappungsbereiche können Bearbeitungsstellen oder Bearbeitungslinien auf der Werkstückoberfläche ausschließlich von einer einzigen Bearbeitungsposition aus vorgenommen werden. Für Arbeitsfenster 10a sind dies in Fig. 4a die Positionen 41 a, die aus der Relativposition 40a heraus gefertigt werden. Sinngemäß anders herum werden im Fenster 10b die Positionen 41b aus der Relativposition 40b heraus gefertigt. Alternativen hierzu sind jeweils nicht möglich, denn die Position 41a und 41b liegen außerhalb des Überlappungsbereiches oder ragen aus ihm heraus. Dagegen liegen die Arbeitspositionen 41u im Überlappungsbereich, und sie können wahlweise aus der einen oder anderen Relativposition heraus gefertigt werden. In Fig. 4a sind die Positionen 41ua als aus der Relativposition 40a herausgefertigt gezeigt, während die Position 41ub aus der Relativposition 40b heraus gefertigt gezeigt ist.

Auf diese Weise entsteht kein deutlich wahrnehmbarer "Stoß" zwischen den beiden Arbeitsfenstern. Vielmehr ist der Übergangsbereich großflächiger, und der - nicht vermeidbare-"Anschlußfehler" ist verteilter und damit weniger konzentriert und deshalb schlechter wahrnehmbar. Anders als gezeigt können statt Liniensegmenten auch punktweise Bearbeitungen vorgenommen werden, wobei für jeden Punkt innerhalb des Überlappungsbereichs entschieden werden kann, ob er aus der einen oder der anderen der möglichen Relativpositionen heraus gefertigt werden soll. Die für das zuerst bearbeitete Arbeitsfenster getroffenen Bearbeitungsentscheidungen zu Arbeitspositionen können gespeichert werden, um nach ihrer Maßgabe im später zu bearbeitenden Arbeitsfenster Arbeitspositionen zu bestimmen bzw. zu vermeiden.

In Fig. 4a ist als die Verschiebungsrichtung des Arbeitsfensters die x-Richtung von links nach rechts angenommen. In dieser x-Richtung liegt die Bearbeitungsstelle 41ub, die aus der zweiten, späteren Relativposition heraus gefertigt wird, hinter der Bearbeitungsstelle 41ua, die aus der ersten Relativposition 40a herausgefertigt wird. Figur 4a zeigt linienhafte Einzelbearbeitungen. Sie können aber auch flächenhafte Stellen ("Inseln") sein, die jeweils durch einen einzigen Laserimpuls oder durch Abfahren der Fläche gefertigt werden können.

Fig. 4b zeigt eine andere Übergangsstrategie. Hier werden durchgehende Linien gefertigt. Auch deren Stöße (Anschlüsse) können Unregelmäßigkeiten aufweisen. Der Übergang aber ist in x-Richtung verteilt. Der Stoß liegt nicht immer an der gleichen x-Position, sondern an unterschiedlichen Stellen in Verschiebungsrichtung (x-Richtung in Fig. 4b). Auch bei dieser Art des Anschlusses gibt es Bearbeitungsstellen 42b auf dem Werkstück, die aus der zweiten Arbeitsrelativposition 40b heraus bearbeitet werden und die in Verschiebungsrichtung (x-Richtung) hinter einer aus der ersten Arbeitsrelativposition 40a bearbeiteten Stelle 42a liegen.

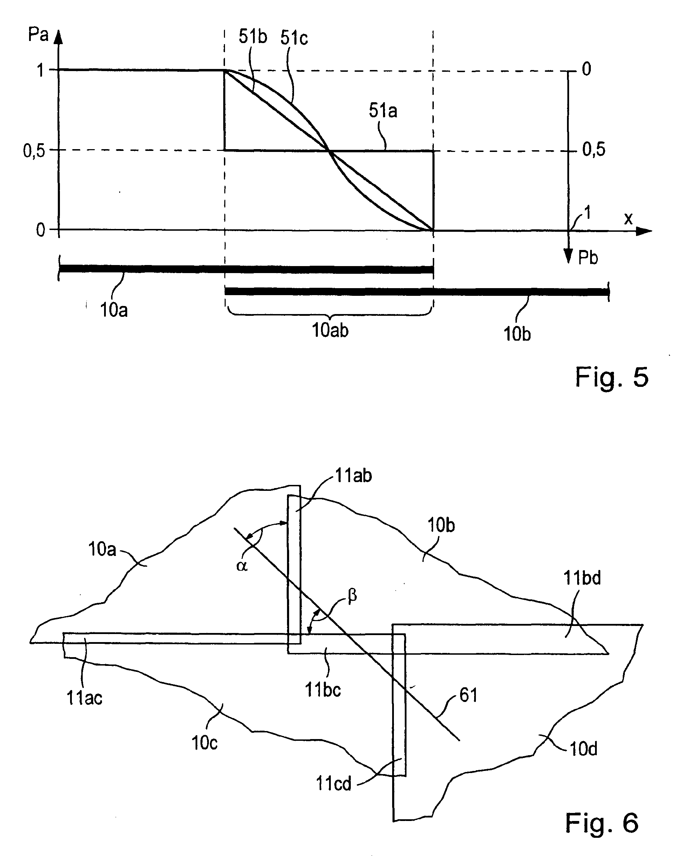

Sowohl in der Ausführungsform der Fig. 4a als auch in der Ausführungsform der Fig. 4b kann entweder die Wahl der Arbeitsrelativposition für die Bearbeitung einer Stelle (Fig. 4a) oder die Wahl des Übergangspunkts für die Führung einer Linie von Arbeitsrelativposition 40a hin zu Arbeitsrelativposition 40b nach bestimmten Kriterien gewählt werden. Das Kriterium kann z.B. ein festes Muster sein, das allerdings beispielsweise relativ großflächig verteilt sein kann und quasi zufällig erscheinen kann. Das Kriterium kann auch tatsächlich eine statistische Funktion sein. Fig. 5 zeigt dementsprechend Beispiele.

Gezeigt ist eine Wahrscheinlichkeit pa über der x-Koordinate, mit der eine bestimmte Stelle aus dem Arbeitsfenster 10a heraus bearbeitet wird. In demjenigen Bereich des Arbeitsfensters, der nicht in einem Übergangsbereich liegt, ist die Wahrscheinlichkeit für die Bearbeitung aus dem überdeckenden Arbeitsfenster heraus 1, weil nur das überdeckende Arbeitsfenster in Frage kommt und alle anderen Arbeitsfenster nicht hinreichen. Im Übergangsbereich 10ab kann sich die Wahrscheinlichkeit dagegen ändern. Sie kann z.B. wie mit Kurve 51a gezeigt konstant 0,5 sein. Dies bedeutet, dass für jede Arbeitsstelle im Überlappungsbereich dies gleich wahrscheinlich ist, entweder aus dem Arbeitsfenster 10a oder aus dem Arbeitsfenster 10b bearbeitet zu werden.

Es sind aber auch Verläufe denkbar, die von der Position im Arbeitsfenster bzw. im Überlappungsbereich abhängen. Kurve 51b zeigt eine im Übergangsbereich linear von 1 auf 0 fallende Wahrscheinlichkeit, Kurve 51c eine s-förmige Wahrscheinlichkeitskurve. Soweit nur zwei Arbeitsfenster überlappen, addieren sich die Wahrscheinlichkeiten der Bearbeitung für eine zu bearbeitende Stelle aus den zwei Fenstern heraus zu 1 auf. Dementsprechend ist der in Fig. 5 gezeigte Verlauf von 1 abgezogen die Wahrscheinlichkeit, aus dem Arbeitsfenster 10b heraus bearbeitet zu werden. Rechts im Graphen ist dies schematisch durch die nach unten gerichtete Koordinate angedeutet.

Das Werkstück kann auch an vielen nicht zusammenhängenden Stellen bearbeitet werden, deren jeweilige Abmessungen s (größte oder äquivalenter Durchmesser) kleiner als die Ausdehnung due des Überlappungsbereichs sind. Dort kann dann gewählt werden, ob die Bearbeitung aus dem einen oder dem anderen möglichen Arbeitsfenster heraus erfolgt. Die Wahl kann statistisch oder quasi-statistisch erfolgt. Die Dimensionierungsvorschrift zwischen s und due kann sein

$$due > n * s$$

wobei n 4 oder 7 oder 10 sein kann. In dieser Dimensionierungsvorschrift kann statt s auch der Abstand ds zwischen unzusammenhängenden Stellen genommen werden, wobei bei ungleichen Abständen ds ein kleinster Abstand sein kann.

Wenn alle Bereiche auf der Werkstückoberfläche Überlappungsbereiche sind, können die Bearbeitungswahrscheinlichkeiten aus einem Fenster heraus kontinuierliche und vorzugsweise symmetrische Kurven sein. Es kann sich beispielsweise um Glockenkurven handeln, die auf die Mitte des jeweiligen Arbeitsfensters zentriert sind.

Dabei wird darauf verwiesen, dass die statistische oder quasistatistische Bearbeitungsentscheidung für das zuerst bearbeitete Fenster getroffen werden kann, dass aber diese Entscheidungen gespeichert werden können, um dann aus dem anderen Arbeitsfenster heraus die "Fehlstellen" systematisch abarbeiten zu können.

Bei einer Anschlusstechnik entsprechend Fig. 4b kann die Position im Überlappungsbereich in x-Richtung, an der ein Linienzug endet (der "Stoß"), eine konstante Wahrscheinlichkeitsdichte im Übergangsbereich haben. Aber auch hier können Verläufe ähnlich denen gemäß 51 b oder 51 c gewählt werden.

Die Situation wird komplexer, wenn Stellen auf dem Werkstück von drei oder mehr Arbeitsfenstern her bearbeitbar sind, etwa in Ausführungsformen, wie sie schematisch in Fig. 3c angedeutet sind. Für die Wahrscheinlichkeit der Bearbeitung können dann für die jeweils verbleibenden Bearbeitungsstellen Wahrscheinlichkeitskurven, z. B. Glockenkurven oder ähnliches, gewählt werden. Auch diese Bearbeitungsentscheidungen können gespeichert werden, um zumindest aus dem letzten Arbeitsfenster heraus nach Maßgabe der gespeicherten Daten die bisherigen "Fehlstellen" systematisch zu schließen.

Fig. 6 zeigt in Kombination mehrere weitere Ausführungsformen. Linie 61 zeigt einen Linienzug, der durch die Strahlführung eingesteuert wird. Man erkennt, dass er mit jeder Arbeitsfenstergrenze einen Winkel α bzw. β hat, der ungleich Null bzw. 90 Grad ist. Anders ausgedrückt laufen die Linien, längs derer der Laserstrahl geführt wird, nicht parallel zu einer Arbeitsfenstergrenze, sondern können hierzu vorgegebene Mindestwinkel oder Winkelbereiche einhalten. Damit wird sichergestellt, dass jede Linienführung eine Arbeitsfenstergrenze unter einem annehmbaren Winkel schneidet, so dass es in den Übergangsbereichen nicht zu schleifenden Schnitten kommt, die in Verbindung mit Positionierungsungenauigkeiten bei der Einstellung der Arbeitsfenster zu markanten unerwünschten Überlagerungen führen können. Insbesondere wird dadurch vermieden, dass parallele Linien aufeinander geschoben werden. Dies wäre in manchen Dimensionierungen selbst dann deutlich erkennbar, wenn ganze Linien gegeneinander ausgetauscht werden, was bei der Führung gemäß Fig.4b beispielsweise möglich ist, wenn hier nicht nur zwischen links und rechts aneinandergrenzenden Arbeitsfenstern der Übergang sicherzustellen ist, sondern auch zwischen oben und unten aneinandergrenzenden Arbeitsfenstern.

Wenn eine Werkstückoberfläche längs gedachter Linien bearbeitet wird, können diese einen Winkel zwischen 30 und 60° mit den Arbeitsfenstergrenzen einschließen, wobei der Winkel vorzugsweise 45° sein kann, so dass sich in Richtung beider Grenzen symmetrische Verhältnisse ergeben. Wenn dagegen allseits bestimmte Winkelvorgaben eingehalten werden sollen, beispielsweise dahingehend, dass der Winkel zwischen Spur und Bearbeitungsfenster größer 60° sein soll, können auch gekrümmte Strahlführungspfade eingesteuert werden.

Fig. 6 zeigt weiterhin, dass die Überlappungsbereiche aneinandergrenzender Arbeitsfenster nicht in beiden Dimensionen (x, y) miteinander fluchten müssen. Vielmehr können Sie in einer der Dimensionen gegeneinander versetzt sein.

Die Verschiebung von Strahlführung und Werkstück relativ zueinander kann erfolgen, wenn die Laserbearbeitung angehalten ist, oder kann auch während der Laserbearbeitung erfolgen.

Wenn ein Gesenk durch flächendeckenden Abtrag mehrerer bzw. vieler Schichten herzustellen ist, kann so vorgegangen werden, dass das oben beschriebene Verfahren des Vorsehens von Überlappungsbereichen nur in Schichten angewendet wird, die nahe oder unmittelbar an der Außenoberfläche liegen. Solche Schichten können variable z-Dimension aufweisen, was laserseitig vorzugsweise über die Fokussieroptik eingesteuert werden kann

Ein besonderer Aspekt der Erfindung ist ein Bearbeitungsverfahren, bei dem nur punktuelle bzw. "inselhafte" Bearbeitungsanwendungen vorgesehen sind, also solche, bei denen nicht voluminös Material durch den Abtrag vieler Schichten hintereinander abzutragen wäre, sondern bei denen lediglich durch eine geringe Anzahl von Durchläufen (vorzugsweise in nur einem pro Oberflächenbereich) untiefe Oberflächenbearbeitungen bzw. nur punktuell bzw. in nicht zusammenhängenden Bereichen vorzunehmen sind. "Inseln" oder "Punkte" in diesem Kontext können isolierte Bearbeitungsbereiche sein, deren größte Abmessung als Obergrenze 200 $\mu m$, 100 $\mu m$, 50 $\mu m$ oder 20 $\mu m$ hat bzw. die durch eine begrenzte Anzahl ($\leq$ 10 oder 5 oder 2 oder 1) von Impulsen eines pulsierenden Laserstrahls gefertigt werden. Aufeinanderfolgende Pulse können auf die gleiche x-y-Position auftreffen, um Punkte größerer Tiefe zu fertigen.

Beispielsweise können auf diese Weise Streuplatten oder Formen hierfür für flächige Hintergrundbeleuchtungen von Laptops gefertigt werden, die größer als das Arbeitsfenster sind. Sie weisen in der Fläche verteilt Streuzentren für Licht auf, die seitlich in die Platte eingestrahltes Licht aus ihr herausstreuen. Diese Streuzentren bzw. Formen hierfür können durch punktuelle oder inselhafte Laserstrahleinwirkung erzeugt werden. Die Punkte oder Inseln können unzusammenhängend sein und statistisch oder quasistatistisch oder regelmäßig in der x-y-Ebene angeordnet sein. Die einzelnen Punkte oder Inseln können aber auch längs gedachter Linien angeordnet sein, wobei dann deren Position auf der jeweils (gedachten) Linie statistisch oder quasistatistisch oder regelmäßig bestimmt sein kann. Die Zahl der Inseln oder Punkte kann vergleichsweise hoch sein, z. B. für ein Werkstück mehr als 1 Million oder auch mehr als 10 Millionen.

Die Wahl der Bearbeitung (d. h. die Wahl des Bearbeitungsfensters, aus dem heraus einzelne Punkte oder Inseln gefertigt werden) kann allgemein ausgedrückt wie oben beschrieben erfolgen.

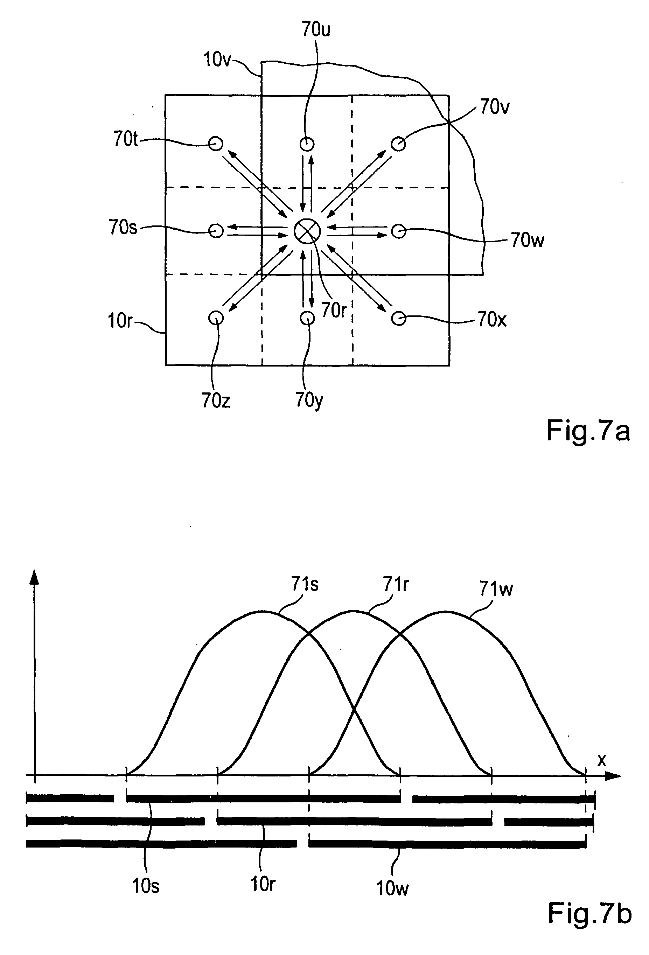

Insbesondere kann ein Überlappungsgrad ue von 50% oder 66,6% gewählt werden entsprechend doppelter bzw. dreifacher Überdeckung der Werkstückoberfläche (Fig. 3b, 3c). Fig. 7a zeigt die Verhältnisse für ue = 66,6%. 70r deutet eine Relativposition an, zu der das Arbeitsfenster 10r gehört. 70s - 70z deuten weitere Relativpositionen an, die jeweils eigene Arbeitsfenster haben. Lediglich das zur Relativposition 70v gehörige Arbeitsfenster 10v ist noch angerissen. Für die übrigen Positionen sind die Begrenzungen der Übersichtlichkeit halber weggelassen. Jede Position auf der Werkstückoberfläche kann somit aus 9 unterschiedlichen Relativpositionen heraus erreicht werden. Für das innenliegende Quadrat im Fenster 10r sind dies die gezeigten Relativpositionen 70r-z.

Allgemein erfolgt die Steuerung so, dass die Bearbeitungen der einzelnen Punkte bzw. Inseln so verschachtelt werden, dass Verschränkungen mit allen möglichen Nachbarn, auch längs diagonaler Richtungen, vorgenommen werden. Es können aus einer gegenüber einer ersten Arbeitsrelativposition verschobenen zweiten Arbeitsrelativposition heraus eine oder mehrere Stelle, Punkte oder Inseln auf dem Werkstück bearbeitet werden, die in Verschiebungsrichtung betrachtet hinter einer aus der ersten Arbeitsrelativposition heraus bearbeiteten Stelle, Punkt oder Insel liegen. Dies kann für Verschiebungsrichtungen längs beider Flächendimensionen (x-Achse, y-Achse) und auch für Verschiebungen längs diagonaler Richtungen gelten.

Fig. 7b zeigt mögliche Verteilungswahrscheinlichkeitsdichten längs der x-Achse für die Bearbeitung einer bestimmten Position aus einer bestimmten Relativposition heraus. Die Kurven 71s, 71r und 71w entsprechen den Arbeitsfenstern 10s, 10r, 10w der Relativpositionen 70s, 70r und 70w. Sie können ortsvariabel sein, z. B. glockenförmig wie gezeigt oder entsprechend einem umgekehrten "V". In quantitativ bzw. qualitativ gleicher Weise können sie sich längs der y-Achse oder auch längs diagonaler Richtungen ergeben. Anders als in Fig. 7b gezeigt können statt ortsvariabler Wahrscheinlichkeitsdichten auch konstante Wahrscheinlichkeitsdichten verwendet werden.

Abermals wird darauf verwiesen, dass die statistische oder quasistatistische Zuordnung von Punkt- oder Inselbearbeitung zu einem bestimmten Arbeitsfenster nur beim zuerst abgearbeiteten Arbeitsfenster (z. B. 10r in Fig. 7a) wählbar sein kann und dann gespeichert werden kann. Ein später abgearbeitetes Fenster (z. B. 10v) kann die schon vorliegenden Bearbeitungen in geeigneter Weise zu berücksichtigen haben, bspw. in der Weise, dass eine geeignet modifizierte statistische Vorgabe ausschließlich auf die verbleibenden freien Flächen angewendet wird. Vom Ergebnis her betrachtet können sich aber die Verhältnisse gemäß der Kurven 71s, r, w einstellen.

Die Zuordnung von Bearbeitungsstellen, insbesondere Punkten oder Inseln, zu einem von mehreren möglichen Arbeitsfenstern, kann vollständig oder teilweise vor Arbeitsbeginn oder vollständig oder teilweise während der Arbeit erfolgen.

Dementsprechend ist auch ein Verfahren zur Oberflächenstrukturierung oder zur Herstellung einer Streuplatte bzw. einer Streuplattenform Gegenstand der Erfindung. Das Werkstück ist der Rohling der Streuplatte bzw. einer Form hierfür. Es ist größer als das Arbeitsfenster der Laserbearbeitungsvorrichtung. Die Streuzentren bzw. Formen hierfür sind viele nicht zusammenhängende Vertiefungen in der Oberfläche, die durch punktuelle oder inselhafte Lasereinwirkung erzeugt werden. Die einzelnen Streuzentren können in bestimmter Weise wie beschrieben verteilt sein. Im Überlappungsbereich zweier Arbeitsfenster kann ihre Fertigung aus dem einen oder aus dem anderen Fenster heraus wie beschrieben entschieden und dann vollzogen werden. Der Überlappungsgrad kann 66,6% längs je einer und auch längs beider Flächendimensionen entsprechend dreifacher vollständiger Abdeckung der Werkstückoberfläche sein.

**Patentansprüche**

1. Verfahren zur Werkstückbearbeitung mittels eines Laserstrahls, bei dem ein Laserstrahl (9) mittels einer Strahlführung (4) bei einer Relativposition zwischen Werkstück (5) und Strahlführung (4) innerhalb eines Arbeitsfensters (10) über die Werkstückoberfläche geführt wird, wobei Strahlführung (4) und Werkstück (5) in einer Verschiebungsrichtung um eine Verschiebungsstrecke so gegeneinander verschieblich sind, dass sie zueinander eine erste (40a) und eine zweite Arbeitsrelativposition (40b) einnehmen können, deren jeweilige Arbeitsfenster (10a-d) untereinander Überlappungsbereiche (11ab, 11ac, 11bd, 11 cd) aufweisen, **dadurch gekennzeichnet, daß**

   aus der zweiten Arbeitsrelativposition (40b) heraus in einem Überlappungsbereich ((11ab) eine Stelle (41ub) auf dem Werkstück (5) bearbeitet wird, die in Verschiebungsrichtung betrachtet hinter einer aus der ersten Arbeitsrelativposition (40a) heraus bearbeiteten Stelle (41ua) liegt, wobei

   für eine Stelle im Überlappungsbereich (11) der Arbeitsfenster (10) nach Maßgabe einer Wahrscheinlichkeitsfunktion (51, 71) entschieden wird, aus welcher Relativposition heraus die Stelle bearbeitet wird oder an welcher Stelle die Bearbeitung aus einer Relativposition heraus endet, um von einer anderen Relativposition fortgesetzt zu werden.

2. Verfahren nach Anspruch 1, **dadurch gekennzeichnet, dass** bei der Verschiebung die Verschiebungsstrecke geringer ist als die Ausdehnung des Arbeitsfensters (10) in Verschiebungsrichtung.

3. Verfahren nach Anspruch 1 oder 2, **dadurch ge-**

**kennzeichnet, daß** die Verschiebungsstrecke v der folgenden Bedingung genügt:

$$v < n * dA$$

wobei n ein Anteilsfaktor ist, der 0,9 oder 0,7 oder 0,5 sein kann, und dA die Abmessung des Arbeitsfensters (10) in Verschiebungsrichtung ist.

4. Verfahren nach Anspruch 1, **dadurch gekennzeichnet, daß** im Überlappungsbereich (11) eine konstante Wahrscheinlichkeit (51a) für die Bearbeitung einer Stelle aus einer der Relativpositionen (40a, 40b) heraus vorliegt.

5. Verfahren nach einem oder mehreren der vorherigen Ansprüche, **dadurch gekennzeichnet, daß** die Verschiebungsstrecken längs einer Richtung so gewählt werden, dass mindestens einige Stellen aus drei Arbeitsrelativpositionen heraus bearbeitet werden können.

6. Verfahren nach einem oder mehreren der vorherigen Ansprüche, **dadurch gekennzeichnet, daß** es in beide Dimensionen der Werkstückoberfläche angewendet wird.

7. Verfahren nach einem oder mehreren der vorherigen Ansprüche, **dadurch gekennzeichnet, daß** der Laserstrahl (9) innerhalb eines Arbeitsfensters (10) so geführt wird, dass seine Bahn auf der Werkstückoberfläche mit jeder Begrenzung (10ar, 10av, 10b1, 10bv, 10ch, 10cr, 10d1, 10dh) des Arbeitsfensters einen Winkel ($\alpha$, $\beta$) von mindestens 10°, vorzugsweise mindestens 30° einschließt.

8. Verfahren nach einem oder mehreren der Ansprüche 2 bis 7, **dadurch gekennzeichnet, daß** die Überlappungsbereiche (11) aneinandergrenzender Arbeitsfenster (10) nicht in beiden Dimensionen (x, y) miteinander fluchten.

9. Verfahren nach einem oder mehreren der Ansprüche 2 bis 8 zur Oberflächenstrukturierung, insbesondere zur Herstellung einer Streuplatte bzw. einer Streuplattenform, bei dem das Werkstück (5) der Rohling der Streuplatte bzw. einer Form hierfür sein kann, das größer als das Arbeitsfenster ist, wobei Bearbeitungsstellen, insbesondere Streuzentren bzw. Formen hierfür durch punktuelle oder inselhafte Lasereinwirkung auf die Werkstückoberfläche erzeugt werden und wobei im Überlappungsbereich (11) zweier Arbeitsfenster (10) die Fertigung einer Bearbeitungsstelle aus einem ausgewählten von mindestens zwei möglichen Arbeitsafenster (11) heraus vollzogen wird, wobei insbesondere Arbeitsfenster (10s-z) eingestellt werden können, indem ausgehend von einer Relativposition (70r) für ein Arbeitsfenster (10r) Verschiebungen um 33,3% der Arbeitsfensterdimension auf Relativpositionen (70t, 70v, 70x, 70z) jeweils in beide Richtungen beider Flächendimensionen und auf Relativpositionen (70s, 70u, 70w, 70y) jeweils in beide Richtungen beider Flächendiagonalen vorgenommen werden, und die Steuerung so erfolgt, dass die Bearbeitungen der einzelnen Punkte bzw. Inseln so verschachtelt werden, dass Verschränkungen mit allen möglichen Nachbarn, auch längs diagonaler Richtungen, vorgenommen werden, indem aus einer gegenüber einer ersten Arbeitsrelativposition (40a) verschobenen zweiten Arbeitsrelativposition (40b) heraus eine oder mehrere Stelle, Punkte oder Inseln auf dem Werkstück bearbeitet werden, die in Verschiebungsrichtung betrachtet hinter einer aus der ersten Arbeitsrelativposition (40a) heraus bearbeiteten Stelle, Punkt oder Insel liegen, wobei dies für Verschiebungsrichtungen längs beider Flächendimensionen und auch für Verschiebungen längs diagonaler Richtungen gilt.

**10.** Verfahren nach einem oder mehreren der Ansprüche 8 oder 9, **dadurch gekennzeichnet, daß** das Werksück (5) an vielen unzusammenhängenden Stellen bearbeitet wird, deren Zahl größer als 1.000.000, vorzugsweise größer 10.000.000 sein kann, und deren jeweilige größte Abmessung in der Werkstückoberfläche kleiner als 100 $\mu$m, vorzugsweise kleiner 50 $\mu$m sein kann, bzw. die durch einzelne Laserimpulse gefertigt sein können.

**11.** Verfahren nach einem oder mehreren der vorherigen Ansprüche, **dadurch gekennzeichnet, dass** innerhalb einer Spur (41) aus der zweiten Arbeitsrelativposition (40b) heraus eine Stelle (41ub) auf dem Werkstück (5) bearbeitet wird, die in Verschiebungsrichtung betrachtet hinter einer aus der ersten Arbeitsrelativposition (40a) heraus bearbeiteten Stelle (41ua) auf der gleichen Spur (41) liegt.

**12.** Maschine zur Bearbeitung eines Werkstücks (5) mittels eines Laserstrahls (9) mit einer Laserquelle (1), einem An-/Ausschalter (2) für das Laserlicht, einer Optik (3) für die Fokussierung des Laserstrahls (9) auf die Werkstückoberfläche, einer Strahlführung (4), um den Laserstrahl (9) auf bzw. über das Werkstück (5) führen zu können, einem Werkstücktisch (6), einer Verstelleinrichtung (7) zum relativen Verstellen des Werkstücktischs (5) gegenüber der Strahlführung (4), einem Maschinenrahmen (8), einer Maschinensteuerung und einem Speicher, wobei

die Maschinensteuerung aufweist:

eine Einrichtung zur Ansteuerung einer Strahlführung (4) bei einer Relativposition zwischen Werkstück (5) und Strahlführung (4) zur Führung eines Laserstrahls innerhalb eines Arbeitsfensters (10) über die Werkstückoberfläche, eine Einrichtung zur Ansteuerung einer Verschiebungseinrichtung zur Verschiebung von Strahlführung (4) und Werkstück (5) in einer Verschiebungsrichtung um eine Verschiebungsstrecke so gegeneinander, dass sie zueinander eine erste (40a) und eine zweite Arbeitsrelativposition (40b) einnehmen können, deren jeweilige Arbeitsfenster (10a-d) untereinander Überlappungsbereiche (11ab, 11ac, 11bd, 11 cd) aufweisen, **dadurch gekennzeichnet, dass**

die Steuerung dazu ausgelegt ist, aus der zweiten Arbeitsrelativposition (40b) heraus in einem Überlappungsbereich ((11ab) eine Stelle (41ub) auf dem Werkstück (5) zu bearbeiten, die in Verschiebungsrichtung betrachtet hinter einer aus der ersten Arbeitsrelativposition (40a) heraus bearbeiteten Stelle (41ua) liegt, und

eine Einrichtung, die für eine Stelle im Überlappungsbereich (11) der Arbeitsfenster (10) nach Maßgabe einer Wahrscheinlichkeitsfunktion (51, 71) entscheidet, aus welcher Relativposition heraus die Stelle bearbeitet wird oder an welcher Stelle die Bearbeitung aus einer Relativposition heraus endet, um von einer anderen Relativposition fortgesetzt zu werden.

**Claims**

**1.** Method for machining a work piece using a laser beam, wherein a laser beam (9) is guided by means of a beam guiding appliance (4) at a relative position between the work piece (5) and the beam guiding appliance (4) within a working window (10) across the work piece surface, the beam guiding appliance (4) and the work piece (5) being displaceable against each other in a displacing direction by a displacement distance such that they may take a first relative working position (40a) and a second relative working position (40b) with respect to one another, the respective working windows (10a-d) thereof having mutual overlapping areas (11ab, 11ac, 11bd, 11cd), **characterised in that**

a location (41ub) on the work piece (5) is machined from the second relative working position (40b) in an overlapping area (11ab) which, seen in the displacing direction, is located behind a location (41ua) machined from the first relative working position (40a), wherein it is decided for a location in the overlapping area (11) of the working windows (10) according to a probability function (51, 71) from which relative position the location is machined or at which location machining from a relative position ends, to be continued from another relative position.

2. Method according to claim 1, **characterised in that** at displacement the displacement distance is smaller that the dimension of the working window (10) in the displacing direction.

3. Method according to claim 1 or 2, **characterised in that** the displacement distance v satisfies the following condition:

$$v < n * dA$$

wherein

n is a proportion coefficient which may be 0.9 or 0.7 or 0.5, and
dA is the dimension of the working window (10) in the displacing direction.

4. Method according to claim 1, **characterised in that** in the overlapping area (11) there is a constant probability (51a) for the machining of a location from one of the relative positions (40a, 40b).

5. Method according to one or more of the preceding claims, **characterised in that** the displacement distances along a direction are selected such that at least some of the locations may be machined from three relative working positions.

6. Method according to one or more of the preceding claims, **characterised in that** it is applied in both dimensions of the work piece surface.

7. Method according to one or more of the preceding claims, **characterised in that** the laser beam (9) is guided within a working window (10) such that its path on the work piece surface includes an angle ($\alpha$, $\beta$) of at least 10°, preferably of at least 30°, with each boundary (10ar, 10av, 10b1, 10bv, 10ch, 10cr 10dl, 10dh) of the working window.

8. Method according to one or more of claims 2 to 7, **characterised in that** the overlapping areas (11) of adjacent working windows (10) are not in both dimensions (x, y) in alignment with each other.

9. Method according to one or more of claims 2 to 8 for surface structuring, particularly for producing a scattering sheet or a scattering sheet mould, wherein the work piece (5) may be the blank of the scattering sheet or a mould therefor, respectively, which is larger than the working window, wherein machining locations, particularly scattering centres or moulds therefor, respectively, are produced by punctual or island-like laser action on the work piece surface and wherein in the overlapping area (11) of two working windows (10) the production of a machining location is performed from a selected one of at least two possible working windows (11), wherein particularly working windows (10s-z) may be adjusted by performing, starting from a relative position (70r) for a working window (10r) displacements by 33.3 % of the working window dimension to relative positions (70t, 70v, 70x, 70z), each in both directions of the two plane dimensions, and to relative positions (70s, 70u, 70w, 70y), each in both directions of the two plane diagonals,

and the control is performed such that the machining of the individual points or islands, respectively, is interlaced in such a manner that entanglements are made with all possible neighbours, also along diagonal directions, by machining, starting from a second relative working position (40b) displaced with respect to a first relative working position (40a), one or more locations, points or islands on the work piece which, seen in the displacing direction, are located behind a location, point or island machined from the first relative working position (40a), and that applying for displacing directions along both plane dimensions and also for displacements along diagonal directions.

10. Method according to one or more of claims 8 or 9, **characterised in that** the work piece (5) is machined at many locations which do not belong together and the number of which may be larger than 1.000.000, preferably larger than 10.000.000, and the respective largest dimension thereof in the work piece surface may be smaller than 100 $\mu$m, preferably smaller than 50 $\mu$m, or that may be produced by single laser pulses, respectively.

11. Method according to one or more of the preceding claims, **characterised in that** a location (41ub) on the work piece (5) is machined within a path (41) from the second relative working position (40b) which, seen in the displacing direction, is located behind a location (41ua) machined from the first relative working position (40a) on the same path.

12. Device for machining a work piece (5) using a laser beam (9), comprising a laser source (1), an on/off switch (2) for the laser light, lenses (3) for focussing the laser beam (9) onto the work piece surface, a beam guiding appliance (4) allowing to guide the laser beam on or across the work piece (5), a work piece support (6), shifting means (7) for relatively shifting the work piece support (6) with respect to the beam guiding appliance (4), a device frame (8), device control means and a memory, the device control means comprising:

means for driving a beam guiding appliance (4) at a relative position between the work piece (5) and the beam guiding appliance (4) for guiding the laser beam within a working window (10) across the work piece surface,

means for driving displacing means for displacing the beam guiding appliance (4) and the work piece (5) in a displacing direction by a displacement distance against each other such that they may take to one another a first relative working position (40a) and a second relative working position (40b), the respective working windows (10a-d) thereof having mutual overlapping areas (11ab, 11ac, 11bd, 11cd),

**characterised in that**

the control means are arranged to machining a location (41ub) on the work piece (5) from the second relative working position (40b) in an overlapping area (11ab) which, seen in the displacing direction, is located behind a location (41ua) machined from the first relative working position (40a), and

means are comprised which decide for a location in the overlapping area (11) of the working windows (10) according to a probability function (51, 71) from which relative position the location is machined or at which location machining from a relative position ends, to be continued from another relative position.

**Revendications**

1.  Procédé d'usinage de pièces au moyen d'un faisceau laser, dans lequel un faisceau laser (9) est guidé par un dispositif de guidage de faisceau (4) dans une position relative entre la pièce à usiner (5) et le guidage de faisceau (4) à l'intérieur d'une plage de travail (10) au-dessus de la surface de la pièce à usiner, le dispositif de guidage de faisceau (4) et la pièce à usiner (5) pouvant être déplacés l'un par rapport à l'autre dans un sens de déplacement et d'une certaine distance de déplacement de manière à ce qu'ils prennent l'un par rapport à l'autre une première (40a) et une deuxième (40b) position relative de travail dont la plage de travail respective (10a-d) présente des zones de chevauchement (11ab, 11 ac, 11bd, 11cd),
    **caractérisé en ce que**
    à partir de la deuxième position relative de travail (40b) est usiné, dans une zone de chevauchement (11ab), un endroit (41ub) sur la pièce à usiner (5) qui, vu dans le sens du déplacement, se trouve derrière un endroit usiné (41ua) à partir de la première position relative de travail (40a),
    dans lequel il est décidé, pour un endroit de la zone de chevauchement (11) de la plage de travail (10), conformément à une fonction de probabilité (51, 71), à partir de quelle position relative l'endroit est usiné ou à quel endroit l'usinage effectué à partir d'une position relative s'arrête pour être poursuivi à partir d'une autre position relative.

2.  Procédé selon la revendication 1, **caractérisé en ce que**, lors du déplacement, la distance de déplacement est inférieure à l'écartement de la plage de travail (10) dans le sens du déplacement.

3.  Procédé selon les revendications 1 ou 2, **caractérisé en ce que** la distance de déplacement v remplit la condition suivante :

$$v < n * dA$$

    où n est un facteur de proportionnalité pouvant être 0,9 ou 0,7 ou 0,5, et dA la dimension de la plage de travail (10) dans le sens du déplacement.

4.  Procédé selon la revendication 1, **caractérisé en ce que**, dans la zone de chevauchement (11) se trouve une probabilité constante (51a) pour l'usinage d'un endroit à partir de l'une des positions relatives (40a, 40b).

5.  Procédé selon l'une ou plusieurs des revendications précédentes, **caractérisé en ce que** les distances de déplacement sont choisies le long d'une direction présentant au moins certains endroits pouvant être usinés à partir de trois positions relatives de travail.

6.  Procédé selon l'une ou plusieurs des revendications précédentes, **caractérisé en ce qu'**il peut être utilisé dans les deux dimensions de la surface de la pièce à usiner.

7.  Procédé selon l'une ou plusieurs des revendications précédentes, **caractérisé en ce que** le faisceau laser (9) est guidé à l'intérieur d'une plage de travail de telle façon que sa trajectoire sur la pièce à usiner forme un angle $(\alpha, \beta)$ d'au moins 10° et de préférence d'au moins 30° avec chaque délimitation (10ar, 10av, 10bl, 10bv, 10ch, 10cr, 10dl, 10dh) de la plage de travail.

8.  Procédé selon l'une ou plusieurs des revendications 2 à 7, **caractérisé en ce que** les zones de chevauchement (11) des plages de travail (10) adjacentes ne sont pas alignées sur les deux dimensions (x, y).

9.  Procédé selon l'une ou plusieurs des revendications 2 à 8 pour la structuration de la surface, notamment la fabrication d'une plaque de répartition ou d'un moule de plaque de répartition, dans lequel la pièce à usiner (5) peut être la pièce brute de la plaque de répartition ou d'un moule et est plus grande que la fenêtre de travail (10), les endroits à usiner, notamment le centre de répartition ou les moules étant pour ce faire générés par une action ponctuelle ou en forme d'îlots du faisceau laser sur la surface de la pièce à usiner, et dans lequel, dans la zone de chevauchement (11) de deux plages de travail (10), un endroit est usiné à partir d'une plage de travail (11) choisie entre au moins deux plages de travail possibles.

la plage de travail (10s-z), en particulier, pouvant être réglée en procédant, à partir d'une position relative (70r) pour une plage de travail (10r), à des déplacements de 33,3 % de la dimension de la plage de travail sur des positions relatives (70t, 70v, 70x, 70z) respectivement dans les deux directions des deux dimensions de la surface, et sur des positions relatives (70s, 70u, 70w, 70y) respectivement dans les deux directions des deux diagonales de la surface, et

la commande s'effectuant de manière à ce que l'usinage des différents points ou îlots sont encastrés de manière à former des entrelacements avec toutes les zones adjacentes possibles, également le long de directions diagonales, en usinant à partir d'une deuxième position relative de travail (40b) décalée par rapport à une première position de travail (40a) un ou plusieurs endroits, points ou îlots sur la pièce à usiner, ceci étant valable pour les sens de déplacement le long des deux dimensions de la surface et également pour les déplacements le long de directions diagonales.

10. Procédé selon l'une ou plusieurs des revendications 8 ou 9, **caractérisé en ce que** la pièce à usiner (5) est usinée à de nombreux endroits isolés dont le nombre peut être supérieur à 1 000 000, de préférence supérieur à 10 000 000, et dont la plus grande dimension respective sur la surface de la pièce à usiner peut être inférieure à 100 $\mu$m, de préférence inférieure à 50 $\mu$m, ou peuvent être réalisé par différentes impulsions laser.

11. Procédé selon l'une ou plusieurs des revendications précédentes, **caractérisé en ce que**, à l'intérieur d'un tracé (41) à partir de la deuxième position relative de travail (40b), un endroit (41ub) de la pièce à usiner (5) est usiné qui, vu dans le sens du déplacement, se trouve derrière un endroit usiné à partir de la première position relative de travail (40a) et se trouvant sur le même tracé (41).

12. Machine d'usinage d'une pièce à usiner (5) au moyen d'un faisceau laser (9) comprenant une source laser (1), un interrupteur marche/arrêt (2) pour la lumière à laser, un instrument optique (3) pour la focalisation du faisceau laser (9) sur la surface de la pièce à usiner, un dispositif de guidage de faisceau (4) permettant de guider le faisceau laser (9) sur ou au-dessus de la surface de la pièce à usiner (5), une table de travail (6), un dispositif de réglage (7) permettant un réglage relatif de la table de travail (5) par rapport au guidage de faisceau (4), un bâti de machine (8), une commande de machine et une mémoire,

la commande de machine présentant :

un dispositif de commande d'un guidage de faisceau (4) à une position relative entre la pièce à usiner (5) et le guidage de faisceau (4) permettant de guider un faisceau laser à l'intérieur d'une plage de travail (10) au-dessus de la surface de la pièce à usiner,

un dispositif de commande d'un dispositif de déplacement permettant de déplacer dans un sens de déplacement le guidage laser (4) et la pièce à usiner (5) l'un par rapport à l'autre d'une distance de déplacement, de manière à ce qu'ils prennent l'un par rapport à l'autre une première (40a) et une deuxième position relative de travail (40b) dont la plage de travail respective (10a-d) présente des zones de chevauchement (11ab, 11ac, 11bd, 11cd),

**caractérisée en ce que**

la commande est conçue pour usiner, à partir de la deuxième position relative de travail (40b) dans une zone de chevauchement (11ab), un endroit (41ub) sur la pièce à usiner (5) qui, vu dans le sens du déplacement, se trouve derrière un endroit (41ua) usiné à partir de la première position relative de travail, et

un dispositif qui décide, pour un endroit dans la zone de chevauchement (11) de la plage de travail (10), conformément à une fonction de probabilité (51, 71), à partir de quelle position relative l'endroit est usiné ou à quel endroit l'usinage effectué à partir d'une position relative s'arrête pour être poursuivi à partir d'une autre position relative.

Fig. 1a

Fig. 1b

Fig. 1c

Fig. 1d

## Fig. 1e

## Fig. 1f

Fig. 2

x

due          due

v

10ax          10bx

dA

Fig. 3a

Fig. 3b

Fig. 3c

Fig. 4a

Fig. 4b

Fig. 5

Fig. 6

Fig.7a

Fig.7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1174208 A
- WO 0018535 A
- DE 10032981
- DE 4209933
- EP 1174208 A2
- US 6193899 B